# EUROPEAN PATENT APPLICATION

(11) **EP 4 836 030 A1**
(43) Date of publication of application: **04.11.2026**
(21) Application number: 24913753.0
(22) Date of filing: 30.12.2024
(51) Int. Cl.: H01M 8/0245, H01M 8/0234, H01M 8/0239, H01M 8/1004, H01M 8/10

(54) **GAS DIFFUSION LAYER AND FUEL CELL COMPRISING SAME**

(30) Priority: 28.12.2023 KR 20230195411
(71) Applicant: JNTG Co., Ltd., Gyeonggi-do 18523 (KR)
(72) Inventor: LEE, Eun Sook, Suwon-si, Gyeonggi-do 16336 (KR); LIM, Tae Gil, Osan-si, Gyeonggi-do 18132 (KR); JYOUNG, Jy Young, Suwon-si, Gyeonggi-do 16664 (KR); CHOI, Jae Young, Hwaseong-si, Gyeonggi-do 18437 (KR); SHIN, Jae Ho, Suwon-si, Gyeonggi-do 16595 (KR); SEO, Jun Won, Siheung-si, Gyeonggi-do 15068 (KR); PARK, Ji Soon, Hwaseong-si, Gyeonggi-do 18392 (KR)
(74) Representative: Santarelli
(86) International application number: PCT/KR2024/021462
(87) International publication number: WO 2025/143949

(57) **Abstract**

A gas diffusion layer and a fuel cell including the same are disclosed. The disclosed gas diffusion layer has an in-plane gas permeability (InP) of 10×10⁻¹² to 100×10⁻¹² m² and a through-plane gas permeability (ThP) of 0.02×10⁻¹² to 1×10⁻¹² m².

## Description

### Technical Field

The present disclosure relates to a gas diffusion layer and a fuel cell including the same. More specifically, the present disclosure relates to a gas diffusion layer in which a ratio of in-plane gas permeability to through-plane gas permeability is controlled, and a fuel cell including the same.

### Background Art

Fuel cells are devices that produce electrical energy through electrochemical reaction of a fuel with oxygen, and, since fuel cells are not heat engines, they have a high efficiency exceeding the Carnot efficiency limit and emit only water vapor as a byproduct.

Polymer electrolyte membrane fuel cells (PEMFCs) have a lower operating temperature and a higher efficiency than other types of fuel cells, have high current density and high power density, have a short start-up time, and have fast response characteristics to load changes.

In addition, polymer electrolyte membrane fuel cells include membrane electrode assemblies (MEAs), each of which includes a fuel electrode (anode) and an air electrode (cathode) formed by respectively bonding gas diffusion layers (GDLs) onto both surfaces of a catalyst coated membrane (CCM) having catalyst layers applied to both sides of a polymer electrolyte membrane.

Bipolar plates are in close contact with both surfaces of the MEAs. Here, the GDLs are manufactured by coating carbon substrates made of a porous carbon material, such as carbon cloth, carbon felt, or carbon paper, with microporous layers (MPLs).

The microporous layers include carbon particles of various sizes, such as flake graphite, spherical graphite, acetylene black, furnace black, activated carbon, and carbon nanotubes (CNTs), and fluorine-based resins, such as polytetrafluoroethylene (PTFE), fluorinated ethylene propylene (FEP), and perfluoroalkoxy alkane (PFA), which bind together the carbon particles of various sizes. The fluorine-based resin serves not only as a binder that binds the carbon particles together, but also, due to the water-repellent properties of the fluorine-based resin, serves to discharge water generated in the catalyst layers toward the separator plates. That is, according to the principle of osmotic pressure, the microporous layer allows hydrogen and air to spread evenly through the small pores and migrate to the catalyst layer, thereby inducing a uniform electrochemical reaction in the catalyst layer. At this time, interface structures between the catalyst layers and the microporous layers directly affect electrochemical performance. The catalyst layers include catalyst particles in which nano-sized noble metal catalyst particles such as platinum and ruthenium are supported on carbon supports, and an ionomer that is a proton-conductive polymer that binds the catalyst particles together. The catalyst layers, which are sites where oxidation/reduction reactions occur, have hydrophilic characteristics due to the ionomer having proton conductivity, while simultaneously having hydrophobicity due to porous structures of the supports. In order to allow gas to flow smoothly within the catalyst layers and to rapidly discharge generated water toward the microporous layers, interface structures between the catalyst layers and the microporous layers are very important.

In particular, electrochemical performance of MEA stacks tends to become very high as MEA manufacturing technology develops and the separator plates come to have structures that facilitate gas discharge. Accordingly, at the same operating voltage, energy density of the MEA stacks has increased and operating current density has increased up to twofold. However, as current density increases, amounts of hydrogen and air required also increase, and accordingly an amount of water generated also increases proportionately.

In conventional MPLs, water repellency is achieved by applying slurries, obtained by dispersing carbon particles and a fluorine-based resin in a dispersion medium composed of a solvent and a dispersant, onto carbon substrates to a predetermined thickness, and then removing the dispersant and melting the fluorine-based resin through drying and sintering processes. Since such conventional MPLs are formed using a mixture of carbon particles and a fluorine-based resin in the same ratio, the conventional MPLs have the same water repellency in a thickness direction of the MPLs. Water generated through electrochemical reactions is concentrated at interfaces between the catalyst layers and the MPLs, and is discharged to the outside while sequentially moving from the interfaces along a thickness direction of the MPLs toward the carbon substrates and the separator plates. However, as current density increases, when the water concentrated at the interfaces between the catalyst layers and the MPLs is not rapidly discharged toward the GDLs and the separator plates, water flooding occurs at the interfaces between the catalyst layers and the MPLs, thus forming water layers, and water flooding sequentially occurs also in moisture-containing regions of the MPLs and carbon substrate regions. Such water flooding hinders supply of reaction gas to the catalyst layers, thereby causing electrochemical performance of the MEA stacks to rapidly deteriorate. In addition, the water layers formed at the interfaces between the catalyst layers and the MPLs may cause reverse potentials and may cause corrosion reactions of carbon rather than electrochemical reactions that produce electricity. As a result, the catalyst supports and the MPLs may corrode, and such corrosion leads to an increase in resistance and a decrease in durability.

### Summary of the Invention

### Technical Problem

An embodiment of the present disclosure provides a gas diffusion layer in which the ratio of in-plane gas permeability to through-plane gas permeability is controlled.

Another embodiment of the present disclosure provides a fuel cell including the gas diffusion layer.

### Technical Solution

One aspect of the present disclosure provides
a gas diffusion layer having an in-plane gas permeability (InP) of 10×10-¹² to 100×10⁻¹² m² and a through-plane gas permeability (ThP) of 0.02×10⁻¹² to 1×10⁻¹² m².

The in-plane gas permeability (InP) and the through-plane gas permeability (ThP) may satisfy Equation 1: [Equation 1] $10 \leq lnP / ThP \leq 5,000 .$

The gas diffusion layer may include a carbon substrate and a microporous layer disposed on the carbon substrate.

The carbon substrate may include carbon fibers, carbon powder, and a carbonized product of a thermosetting resin.

The carbon substrate may have pores with a mean pore diameter of 200 µm or less.

The microporous layer may include carbon particles, a water-repellent binder resin, and a thickener.

The microporous layer may have pores with a modal pore diameter of 100 to 300 nm.

Another aspect of the present disclosure provides
a fuel cell including the gas diffusion layer.

### Advantageous Effects of the Invention

A gas diffusion layer according to an embodiment of the present disclosure has a ratio of in-plane gas permeability to through-plane gas permeability within a controlled range, thereby enabling a fuel cell including the same to exhibit high performance even when operated in low-humidity, high-temperature, and pressurized environments.

### Brief Description of the Drawings

FIG. 1 is a diagram for explaining a method of measuring in-plane gas permeability.
FIG. 2 is a diagram for explaining a method of measuring through-plane gas permeability.

### Detailed Description of Embodiments

Hereinafter, a gas diffusion layer and a fuel cell including the same according to an embodiment of the present disclosure will be described in detail.

As used herein, the "in-plane gas permeability (InP) of the gas diffusion layer" refers to the gas permeability passing in a direction parallel to the smooth surface (the widest surface) of the gas diffusion layer, and the "through-plane gas permeability (ThP) of the gas diffusion layer" refers to the gas permeability passing in a direction perpendicular to the smooth surface of the gas diffusion layer.

In addition, as used herein, the mean pore diameter is an average value of the entire pore sizes, and is calculated as a weighted average of the pore size and the volume of the corresponding pore: $Mean pore diameter \left({D}_{mean}\right) = \left(Σ\left(di*Vi\right)\right) / \left(Σ\left(Vi\right)\right)$ Here, di refers to the size of a specific pore, and Vi refers to the mercury intrusion volume in the corresponding pore. The mean pore diameter reflects the entire pore size, but may not clearly represent the size of a specific pore when the data has an asymmetric or multimodal distribution.

In addition, as used herein, the "modal pore diameter" refers to the pore size corresponding to the highest peak in the pore distribution curve, which may be understood as the same concept as the mode. Specifically, the pore size on the x-axis corresponding to the maximum value of the y-axis (Log Differential Intrusion) in the measured pore size distribution data is defined as the modal pore diameter. The modal pore diameter represents the dominant pore size in the pore size distribution, which is closely associated with functional characteristics under actual operating conditions. On the other hand, since the mean pore diameter is calculated based on the entire pore size distribution, it may not accurately reflect the actual dominant pore size in a multimodal distribution.

For example, the following patterns may be observed in the pore size distribution:
(1) Single peak distribution: When a distinct peak appears near about 100 nm in the pore size distribution curve, the x-axis value of the peak is defined as the modal pore diameter.
(2) Multimodal distribution: When peaks appear near about 100 nm and near 300 to 600 nm, respectively, the x-axis value at the position of the peak having a larger value on the y-axis (Log Differential Intrusion) is defined as the modal pore diameter.

### [Method of Measuring Modal Pore Diameter]

As a method of measuring the modal pore diameter, mercury intrusion porosimetry (hereinafter referred to as "MIP") is used. The method of measuring the modal pore diameter by MIP is as follows:
(1) Mercury intrusion into pores: mercury is caused to penetrate into the pores by applying external pressure.
(2) Calculation of the relationship between pressure and pore diameter: the relationship between pressure (P) and pore diameter (d) is calculated according to the Washburn equation: $d = - \left(4\times surface tension\times cos contact angle\right) / P$ Here, the "surface tension" represents the surface tension of mercury, and the "contact angle" represents the contact angle between the mercury and the pore wall.
(3) Data processing: the measured data is processed in the following format:
   x-axis: pore size (logarithmic scale)
   y-axis: log differential intrusion of mercury by pore size

A gas diffusion layer according to an embodiment of the present disclosure has an in-plane gas permeability (InP) of 10×10⁻¹² to 100×10⁻¹² m² and a through-plane gas permeability (ThP) of 0.02×10⁻¹² to 1×10-¹² m². When the in-plane gas permeability (InP) and the through-plane gas permeability (ThP) are each within the above ranges, a fuel cell including the gas diffusion layer can exhibit high performance even when operated under low-humidity, high-temperature, and pressurized environments.

The in-plane gas permeability (InP) can be appropriately controlled by adjusting the weight ratio of a thermosetting resin to carbon fibers included in a carbon substrate, which will be described later. Specifically, as the weight ratio of the thermosetting resin to the carbon fibers included in the carbon substrate decreases, the in-plane gas permeability (InP) can increase.

The through-plane gas permeability (ThP) can be appropriately controlled by adjusting the content ratio of a thickener added when forming a microporous layer, which will be described later. Specifically, as the content ratio of the thickener added when forming the microporous layer decreases, the through-plane gas permeability (ThP) can increase.

The in-plane gas permeability (InP) and the through-plane gas permeability (ThP) may satisfy Equation 1: [Equation 1] $10 \leq lnP / ThP \leq 5,000 .$

When the in-plane gas permeability (InP) and the through-plane gas permeability (ThP) satisfy Equation 1, a fuel cell including the gas diffusion layer can exhibit high performance even when driven in a low-humidity, high-temperature, and pressurized environment.

The gas diffusion layer may include a carbon substrate and a microporous layer disposed on the carbon substrate.

The carbon substrate may include carbon fibers, carbon powder, and a carbonized product of a thermosetting resin.

The carbon fibers may have a length of 3 mm to 25 mm or 3 mm to 30 mm, and one type, two types, or three or more types of carbon fibers may be used in combination.

The carbon powder may include activated carbon, carbon black, acetylene black, Ketjen black, Denka black, carbon whiskers, activated carbon fibers, vapor grown carbon fibers (VGCF), carbon aerogels, carbon nanotubes, carbon nanofibers, carbon nanohorns, natural graphite, synthetic graphite, or a combination thereof.

The thermosetting resin may include a phenol resin, a polyurethane resin, a polyimide resin, a melamine resin, an epoxy resin, or a combination thereof.

The carbon substrate may be carbon paper, carbon fiber, carbon felt, or a carbon sheet, but the present disclosure is not limited thereto.

In addition, the carbon substrate may have pores with a mean pore diameter of 200 µm or less.

In addition, the carbon substrate may further include a water-repellent binder resin described below.

The microporous layer may include carbon particles, a water-repellent binder resin, and a thickener.

The carbon particles may include activated carbon, carbon black, acetylene black, Ketjen black, Denka black, carbon whiskers, activated carbon fibers, vapor grown carbon fibers (VGCF), carbon aerogels, carbon nanotubes, carbon nanofibers, carbon nanohorns, natural graphite, synthetic graphite, or a combination thereof.

The water-repellent binder resin may include polytetrafluoroethylene (PTFE), a tetrafluoroethylene-perfluoroalkyl vinyl ether copolymer, a fluorinated ethylene-propylene (FEP) copolymer, a tetrafluoroethylene-hexafluoropropylene copolymer, perfluoroalkoxy (PFA), polychlorotrifluoroethylene, an ethylene-tetrafluoroethylene (ETFE) copolymer, polyvinylidene fluoride (PVDF), a PVDF-based copolymer, or a combination thereof.

The thickener may include cellulose, methylcellulose, hydroxypropyl methylcellulose, hydroxyethyl methylcellulose, hydroxyethylcellulose, carboxymethylcellulose, starch, agar, azodicarbonamide, calcium, polyacrylate, polymethacrylate, polymethyl methacrylate, polyvinyl alcohol, polyvinylpyrrolidone, polyisobutene, polytetrahydrofuran, or a combination thereof.

The thickener may be used without limitation as to its form, such as a solid, liquid, spherical, or fibrous thickener, so long as it performs a thickening function.

The microporous layer may have pores with a modal pore diameter of 100 to 300 nm.

Another aspect of the present disclosure provides a fuel cell including the gas diffusion layer described above.

Hereinafter, a method of manufacturing a gas diffusion layer according to an embodiment of the present disclosure will be described in detail.

### (1) Preparation of carbon substrate

### 1) Carbon fiber structure (carbon fiber pre-web) forming process

First, a carbon fiber web is formed. To this end, by using a conventional papermaking method based on wet dispersion, a carbon fiber structure having an isotropic structure in which carbon fibers are randomly arranged, that is, a carbon fiber pre-web, can be obtained. Specifically, the carbon fiber pre-web can be manufactured using a wet nonwoven fabric process. That is, a single type or two or more types of carbon fibers having different lengths are made to be mixed in a state sufficiently dispersed in a dispersion medium in an opening machine, and the carbon fiber dispersion thus obtained is supplied to a papermaking machine to be laminated on a papermaking machine wire mesh (belt). In this case, the carbon fiber dispersion may include a dispersant so as to lower the surface energy of the carbon fibers, but this is not essential. The dispersion may further include binder short fibers in addition to the carbon fibers. The binder short fibers may be, for example, one or two or more selected from the group consisting of polyvinyl alcohol (PVA) short fibers, low-melting-point (LM) polyester short fibers, polyethylene (PE) short fibers, polypropylene (PP) short fibers, cellulose short fibers, and pitch short fibers.

Here, the areal weight and thickness of the carbon fiber pre-web can be controlled by the supply amount of the carbon fibers fed to the paper machine and the paper-making speed. In the carbon fiber pre-web thus prepared, the surface contacting the wire mesh and the opposite surface may have the same structure, or the pre-web may have a pore gradient in the thickness direction.

### 2) Thermosetting resin impregnation and molding curing process

Subsequently, a mixed solution including a thermosetting resin and carbon powder is impregnated into the carbon fiber pre-web and dried. The carbon powder serves to increase the electrical conductivity between carbonized products of the thermosetting resin and the binder short fibers, and the carbon fibers. Specifically, after the carbon fiber pre-web forming process, the carbon fiber structure (carbon fiber pre-web) is impregnated with a slurry including a thermosetting resin (optionally, binder short fibers) and carbon powder, and then dried to obtain an impregnated carbon fiber pre-web.

The thermosetting resin may be applied by using, for example, one or a mixture of two or more selected from an epoxy resin or a phenolic resin, for example, a novolac or resol type phenol formaldehyde resin. Examples of the thermosetting resin that can be applied include those commercially available under the trade names or product names of KC-510 (Kangnam Chemical, Korea), TD-787 (Kangnam Chemical, Korea), KC-5024 (Kangnam Chemical, Korea), KC-3750, KC-5565, Bakelite PF786SW2 (Hexion), PF7870SW (Hexion), and PF786SW2 (Hexion). However, it is not limited to only the above products, and a resol or novolac type phenolic resin that has a carbon yield of 10 wt% or more after the carbonization process can be particularly applied.

The carbon powder may be one or more selected from the group consisting of carbon black, Ketjen black, acetylene black, furnace black and thermal black, graphite or thermally expandable graphite, carbon aerogels, carbon nanotubes, carbon nanofibers, carbon nanohorn powder, and natural or synthetic graphite powder. For specific examples, natural graphite powder or synthetic graphite powder commercially available under trade names or product names such as Cond 5, 8 (Samjung C&G, Korea), SFG4 (Imerys, EU), and ES350F5 (Samjung C&G, Korea); or thermally expandable graphites can be applied, and as carbon blacks, those available under the product names 150G (Imerys, EU) or Vulcan Xc-72R (Cabot, USA), Ketjen blacks (AkzoNobel), Denka black, carbon whiskers, and the like can be applied, and in addition, carbon nanofibers, vapor grown carbon fibers (VGCF), and the like can be applied. However, it is not limited to only the above products.

Water is mainly used as the dispersion medium of the slurry, and in some cases, a dispersant may be used to increase dispersibility.

The dispersant may be one or more selected from the group consisting of a cationic surfactant, an anionic surfactant, a nonionic surfactant, and an amphoteric surfactant, or a combination thereof. Specifically, the dispersant may be a cationic surfactant such as alkyltrimethylammonium salts, alkyldimethylbenzylammonium salts, and amine phosphate salts; an anionic surfactant such as polyoxyalkylene alkyl ethers, polyoxyethylene derivatives, alkylamine oxides, and polyoxyalkylene glycols; an amphoteric surfactant such as alanine-based, imidazolium betaine-based, amidopropyl betaine-based surfactants, and aminodipropionate salts; a nonionic surfactant such as alkylaryl polyether alcohol-based surfactants, and the like, but is not limited thereto. Commercially available anionic surfactants include HOSTAPAL and EMULSOGEN of Clariant, Dispersbyk of BYK, and Dispers of TEGO, and nonionic surfactants include Triton X-100 and the like. The dispersant used may be any material that can be removed by thermal decomposition at a temperature of 250 to 400°C.

The weight ratio of the thermosetting resin to the carbon powder can be controlled to be 95:5 to 60:40, and preferably can be controlled to 90:10 to 70:30.

After impregnating and drying the carbon fiber structure (carbon fiber pre-web) as described above, the thermosetting resin is cured by applying heat and pressure to the carbon fiber web at a temperature of 100 to 200 °C and a pressure of 3 to 20 kgf/cm2, and the resulting carbon fiber web is compressed and flattened. In the present molding curing process, the density of the gas diffusion layer can be increased by stacking and laminating two or more, for example, two to six, for example, two to three sheets of the dried carbon fiber web and then molding and curing them, and a flat and even high-density carbon fiber web laminate can be obtained.

### 3) Carbonization and Graphitization Process

Subsequently, the carbon substrate is heated at a carbonization temperature of 500 to 1,000 °C in an inert atmosphere without applying a load to the carbon fiber web laminate, thereby carbonizing the thermosetting resin and the binder short fibers. Subsequently, in a continuous process following the carbonization process, the carbonized carbon fiber web laminate is heated at a graphitization temperature of 1,600 to 2,800 °C in an inert atmosphere without applying a load to the carbon fiber web laminate, thereby graphitizing the carbonized carbon fiber web laminate to obtain a carbon substrate for a gas diffusion layer. Specifically, by applying heat and pressure to the carbon fiber web laminate at a temperature of 100 to 200 °C and a pressure of 3 to 20 kgf/cm², the thermosetting resin is cured, and the carbon fiber web laminate is compressed and flattened. Specifically, the carbon fiber web laminate that has undergone the thermosetting process is subjected to high-temperature heat treatment in an inert atmosphere, thereby carbonizing and graphitizing the thermosetting resin and the like contained in the carbon fiber web laminate, to obtain a carbon substrate for a gas diffusion layer.

### 4) Water-Repellent Treatment of Carbon Substrate

The carbon substrate may be subjected to a water-repellent treatment by impregnating the prepared carbon substrate with an aqueous dispersion of a water-repellent binder resin and then drying it.

### (2) Preparation of Composition for Forming Microporous Layer

A composition for forming a microporous layer is prepared by mixing a water-repellent binder resin, carbon powder, a dispersant, a thickener, and a solvent. Since the water-repellent binder resin, the carbon powder, the dispersant, and the thickener are respectively the same as those described above, a detailed description thereof will be omitted herein.

The composition for forming a microporous layer may be prepared, for example, through (a) adding carbon powder to a solution including a dispersant and milling or high-speed mixing the same so as to be homogeneously dispersed and (b) adding a water-repellent binder resin to the mixture obtained in process (a) and low-speed mixing the same so as to be homogeneously dispersed.

For example, the composition for forming a microporous layer may include 1 to 5 parts by weight of a dispersant, 7 to 30 parts by weight of carbon powder, and 3 to 20 parts by weight of a water-repellent binder resin, based on 100 parts by weight of the total solids in the composition for forming a microporous layer. The amount of the solvent may be 45 to 89 parts by weight of the solvent, based on 100 parts by weight of the total solids in the composition for forming a microporous layer.

The solvent may be used, for example, by further mixing a high-boiling-point solvent, such as ethylene glycol, propylene glycol, dimethyl sulfoxide (DMSO), N-methyl-2-pyrrolidone (NMP), or butyl acetate, with a base solvent such as water, n-propanol, or isopropanol. For example, a high-boiling-point solvent may be used by mixing the same with water.

In order to prepare the composition for forming a microporous layer, since the water-repellent binder resin may be modified by the dispersant in the composition for forming a microporous layer or by the shear force of a mixer during mixing after the water-repellent binder resin is added, the types of the dispersant and the mixer may be appropriately selected.

### (3) Preparation of Gas Diffusion Layer

The composition for forming a microporous layer prepared in (2) above is applied onto the water-repellent-treated carbon substrate and then dried, thereby preparing a gas diffusion layer in which a microporous layer is formed on the water-repellent-treated carbon substrate.

Hereinafter, the present disclosure will be described with reference to the following examples; however, the present disclosure is not limited only to the following examples.

### Example 1: Preparation of Gas Diffusion Layer

### (1) Preparation of Carbon Substrate

70 g of a first carbon fiber having a carbon content of 95 wt%, a diameter of 7 µm, and a fiber length of about 6 mm (manufacturer: Toray, product number: T300), 30 g of a second carbon fiber having a carbon content of 95 wt%, a diameter of 7 µm, and a fiber length of 12 mm (manufacturer: Toray, product number: T300), 1 g of a dispersant (Triton X-100), and 5 g of polyvinyl alcohol (PVA) short fibers having a fiber length of 6 mm (manufacturer: Nycon, product number: RMS702) were added to 200 L of water and uniformly dispersed by mechanical mixing at a speed of 1,500 rpm for about 20 minutes, thereby obtaining a dispersion for forming a carbon fiber pre-web. Thereafter, the dispersion was introduced into an agitator of a paper machine, and 300 L of water was additionally added and stirred, after which the dispersion was supplied to an inclined fourdrinier apparatus equipped with a 120# wire mesh, and water was removed with a vacuum pump. In this manner, by passing the wire mesh through the dispersion, carbon fibers were deposited on the wire mesh to form a carbon fiber pre-web in the form of a nonwoven fabric. Thereafter, the carbon fiber pre-web was impregnated with a slurry, in which a phenolic resin solution (weight average molecular weight: 4,000, solvent: N-methyl-2-pyrrolidone) and graphite particles (manufacturer: Asbury Carbons, model name: 5991) (phenolic resin/graphite particle weight ratio = 50/50, total solid content in the mixture: about 20 wt%) were dispersed, in an amount of 4 mg/cm². Subsequently, the carbon fiber pre-web impregnated with the phenolic resin and the graphite particles was heated at a temperature of 1,400 °C under a nitrogen atmosphere to carbonize the phenolic resin and PVA components, thereby obtaining a carbon fiber web (thickness: 150 µm) including a carbonized product that bonds the carbon fibers. Thereafter, the carbon fiber web was immersed in a 5 wt% PTFE aqueous dispersion (Du Pont) and coated such that the content of PTFE was 10 wt% of the carbon substrate, dried, and then heat-treated at 350 °C for 30 minutes under an air atmosphere, thereby obtaining a water-repellent carbon substrate.

### (2) Preparation of Composition for Forming Microporous Layer

1000 g of deionized water, 20 g of a dispersant (Triton X-100), 82 g of carbon black (Vulcan XC-72), 20 g of thermally expandable graphite (Ecophit(R) G), 8 g of a 60 wt% polytetrafluoroethylene (PTFE) aqueous dispersion, and 3.06 g of a thickener (hydroxypropyl methylcellulose) (3 wt% relative to the total weight of the carbon black and the thermally expandable graphite) were added and mechanically mixed, thereby obtaining a composition for forming a microporous layer.

### (3) Preparation of Gas Diffusion Layer

The composition for the microporous layer prepared in (2) above was applied to the water-repellent carbon substrate prepared in (1) above and dried, and then heat-treated at 350 °C for 30 minutes under an air atmosphere, thereby obtaining a gas diffusion layer.

### Example 2: Preparation of Gas Diffusion Layer

A gas diffusion layer was prepared in the same manner as in Example 1 above, except that, in the process of preparing the carbon substrate in (1), the amount of the slurry of phenolic resin and graphite particles impregnated into the carbon fiber pre-web was changed to 5.2 mg/cm².

### Example 3: Preparation of Gas Diffusion Layer

A gas diffusion layer was prepared in the same manner as in Example 1 above, except that, during the preparation of the carbon substrate in (1), the amount of the slurry of phenolic resin and graphite particles impregnated into the carbon fiber pre-web was changed to 2.5 mg/cm².

### Example 4: Preparation of Gas Diffusion Layer

A gas diffusion layer was prepared in the same manner as in Example 1 above, except that, during the preparation of the composition for forming the microporous layer in (2), the amount of the thickener (hydroxypropyl methylcellulose) added was changed to 6.12 g (6 wt% relative to the total weight of the carbon black and the thermally expandable graphite).

### Example 5: Preparation of Gas Diffusion Layer

A gas diffusion layer was prepared in the same manner as in Example 1 above, except that, during the preparation of the composition for forming the microporous layer in (2), the amount of the thickener (hydroxypropyl methylcellulose) added was changed to 1.53 g (1.5 wt% relative to the total weight of the carbon black and the thermally expandable graphite).

### Example 6: Preparation of Gas Diffusion Layer

A gas diffusion layer was prepared in the same manner as in Example 1 above, except that, during the preparation of the carbon substrate in (1), the amount of the slurry of phenolic resin and graphite particles impregnated into the carbon fiber pre-web was changed to 5.2 mg/cm², and during the preparation of the composition for forming the microporous layer in (2), the amount of the thickener (hydroxypropyl methylcellulose) added was changed to 1.53 g (1.5 wt% relative to the total weight of the carbon black and the thermally expandable graphite).

### Example 7: Preparation of Gas Diffusion Layer

A gas diffusion layer was prepared in the same manner as in Example 1 above, except that, during the preparation of the carbon substrate in (1), the amount of the slurry of phenolic resin and graphite particles impregnated into the carbon fiber pre-web was changed to 2.5 mg/cm², and during the preparation of the composition for forming the microporous layer in (2), the amount of the thickener (hydroxypropyl methylcellulose) added was changed to 1.53 g (1.5 wt% relative to the total weight of the carbon black and the thermally expandable graphite).

### Example 8: Preparation of Gas Diffusion Layer

A gas diffusion layer was prepared in the same manner as in Example 1 above, except that, during the preparation of the carbon substrate in (1), the amount of the slurry of phenolic resin and graphite particles impregnated into the carbon fiber pre-web was changed to 2.5 mg/cm², and during the preparation of the composition for forming the microporous layer in (2), the amount of the thickener (hydroxypropyl methylcellulose) added was changed to 6.12 g (6 wt% relative to the total weight of the carbon black and the thermally expandable graphite).

### Example 9: Preparation of Gas Diffusion Layer

A gas diffusion layer was prepared in the same manner as in Example 1 above, except that, during the preparation of the carbon substrate in (1), the amount of the slurry of phenolic resin and graphite particles impregnated into the carbon fiber pre-web was changed to 5.2 mg/cm², and during the preparation of the composition for forming the microporous layer in (2), the amount of the thickener (hydroxypropyl methylcellulose) added was changed to 6.12 g (6 wt% relative to the total weight of the carbon black and the thermally expandable graphite).

### Reference Example 1: Preparation of Gas Diffusion Layer

A gas diffusion layer was prepared in the same manner as in Example 1 above, except that, during the preparation of the carbon substrate in (1), the amount of the slurry of phenolic resin and graphite particles impregnated into the carbon fiber pre-web was changed to 6.5 mg/cm², and during the preparation of the composition for forming the microporous layer in (2), the amount of the thickener (hydroxypropyl methylcellulose) added was changed to 1.53 g (1.5 wt% relative to the total weight of the carbon black and the thermally expandable graphite).

### Reference Example 2: Preparation of Gas Diffusion Layer

A gas diffusion layer was prepared in the same manner as in Example 1 above, except that, during the preparation of the carbon substrate in (1), the amount of the slurry of phenolic resin and graphite particles impregnated into the carbon fiber pre-web was changed to 5.2 mg/cm², and during the preparation of the composition for forming the microporous layer in (2), the amount of the thickener (hydroxypropyl methylcellulose) added was changed to 1.02 g (1 wt% relative to the total weight of the carbon black and the thermally expandable graphite).

### Reference Example 3: Preparation of Gas Diffusion Layer

A gas diffusion layer was prepared in the same manner as in Example 1 above, except that, during the preparation of the carbon substrate in (1), the amount of the slurry of phenolic resin and graphite particles impregnated into the carbon fiber pre-web was changed to 2.5 mg/cm², and during the preparation of the composition for forming the microporous layer in (2), the amount of the thickener (hydroxypropyl methylcellulose) added was changed to 1.02 g (1 wt% relative to the total weight of the carbon black and the thermally expandable graphite).

### Reference Example 4: Preparation of Gas Diffusion Layer

A gas diffusion layer was prepared in the same manner as in Example 1 above, except that, during the preparation of the carbon substrate in (1), the amount of the slurry of phenolic resin and graphite particles impregnated into the carbon fiber pre-web was changed to 1 mg/cm², and during the preparation of the composition for forming the microporous layer in (2), the amount of the thickener (hydroxypropyl methylcellulose) added was changed to 1.53 g (1.5 wt% relative to the total weight of the carbon black and the thermally expandable graphite).

### Reference Example 5: Preparation of Gas Diffusion Layer

A gas diffusion layer was prepared in the same manner as in Example 1 above, except that, during the preparation of the carbon substrate in (1), the amount of the slurry of phenolic resin and graphite particles impregnated into the carbon fiber pre-web was changed to 1 mg/cm², and during the preparation of the composition for forming the microporous layer in (2), the amount of the thickener (hydroxypropyl methylcellulose) added was changed to 6.12 g (6 wt% relative to the total weight of the carbon black and the thermally expandable graphite).

### Reference Example 6: Preparation of Gas Diffusion Layer

A gas diffusion layer was prepared in the same manner as in Example 1 above, except that, during the preparation of the carbon substrate in (1), the amount of the slurry of phenolic resin and graphite particles impregnated into the carbon fiber pre-web was changed to 2.5 mg/cm², and during the preparation of the composition for forming the microporous layer in (2), the amount of the thickener (hydroxypropyl methylcellulose) added was changed to 8.16 g (8 wt% relative to the total weight of the carbon black and the thermally expandable graphite).

### Reference Example 7: Preparation of Gas Diffusion Layer

A gas diffusion layer was prepared in the same manner as in Example 1 above, except that, during the preparation of the carbon substrate in (1), the amount of the slurry of phenolic resin and graphite particles impregnated into the carbon fiber pre-web was changed to 5.2 mg/cm², and during the preparation of the composition for forming the microporous layer in (2), the amount of the thickener (hydroxypropyl methylcellulose) added was changed to 8.16 g (8 wt% relative to the total weight of the carbon black and the thermally expandable graphite).

### Reference Example 8: Preparation of Gas Diffusion Layer

A gas diffusion layer was prepared in the same manner as in Example 1 above, except that, during the preparation of the carbon substrate in (1), the amount of the slurry of phenolic resin and graphite particles impregnated into the carbon fiber pre-web was changed to 6.5 mg/cm², and during the preparation of the composition for forming the microporous layer in (2), the amount of the thickener (hydroxypropyl methylcellulose) added was changed to 6.12 g (6 wt% relative to the total weight of the carbon black and the thermally expandable graphite).

### Reference Example 9: Preparation of Gas Diffusion Layer

A gas diffusion layer was prepared in the same manner as in Example 1 above, except that, during the preparation of the carbon substrate in (1), the amount of the slurry of phenolic resin and graphite particles impregnated into the carbon fiber pre-web was changed to 6.5 mg/cm².

### Reference Example 10: Preparation of Gas Diffusion Layer

A gas diffusion layer was prepared in the same manner as in Example 1 above, except that, during the preparation of the carbon substrate in (1), the amount of the slurry of phenolic resin and graphite particles impregnated into the carbon fiber pre-web was changed to 1 mg/cm².

### Reference Example 11: Preparation of Gas Diffusion Layer

A gas diffusion layer was prepared in the same manner as in Example 1 above, except that, during the preparation of the composition for forming the microporous layer in (2), the amount of the thickener (hydroxypropyl methylcellulose) added was changed to 1.02 g (1 wt% relative to the total weight of the carbon black and the thermally expandable graphite).

### Reference Example 12: Preparation of Gas Diffusion Layer

A gas diffusion layer was prepared in the same manner as in Example 1 above, except that, during the preparation of the composition for forming the microporous layer in (2), the amount of the thickener (hydroxypropyl methylcellulose) added was changed to 8.16 g (8 wt% relative to the total weight of the carbon black and the thermally expandable graphite).

### Evaluation Example 1: Evaluation of Gas Permeability of Gas Diffusion Layers

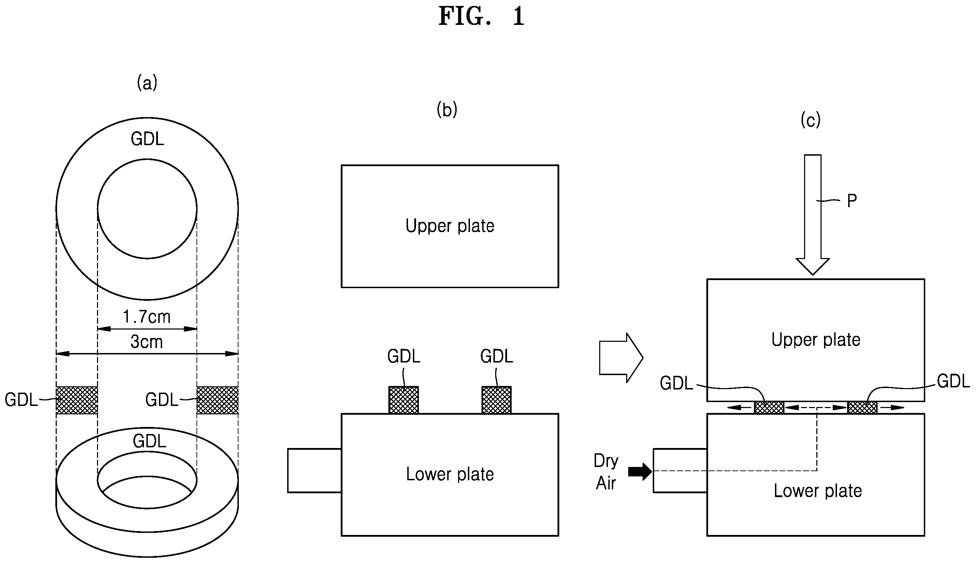

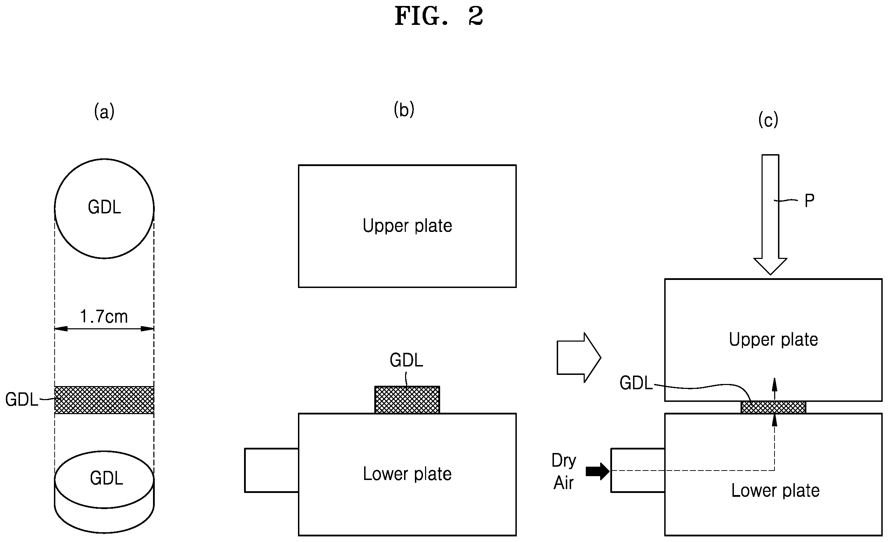

The gas permeability of each of the gas diffusion layers prepared in Examples 1 to 9 and Reference Examples 1 to 12 above was evaluated by the following method, and the results are shown in Table 2.
(1) In-plane gas permeability (InP) (m²): The in-plane gas permeability (InP) of the gas diffusion layer (GDL) was evaluated by the following method.
   1) First, as shown in (a) of FIG. 1, the GDL was cut into a donut shape to prepare a GDL sample. (a) of FIG. 1 shows a plan view (top), a cross-sectional view (center), and a perspective view (bottom) of the GDL sample.
   2) Next, as shown in (b) of FIG. 1, the GDL sample was placed on the lower plate of a CPRT-10L instrument manufactured by Living Care. The CPRT-10L instrument manufactured by Living Care is a device configured to measure changes in the thickness, resistance, and differential pressure of the GDL sample according to the pressure applied to the GDL sample (see Korean Patent No. 10-0902316).
   3) Next, as shown in (c) of FIG. 1, while a pressure (P) of 1 MPa was applied to the GDL sample through the upper plate, dry air was flowed at 50 sccm (standard cubic centimeter per minute), and the differential pressure (ΔP) measured between the inner hole (i.e., the donut inner hole) and the exterior of the GDL sample was measured.
   4) The differential pressure (ΔP) was applied to Darcy's law represented by Equation 2 to obtain the in-plane gas permeability (InP).
   5) The processes of 2) to 4) above were repeated for 10 GDL samples to evaluate the gas permeability (kg) (i.e., the in-plane gas permeability (InP)), and then the average value thereof was taken. [Equation 2] ${U}_{g} = Q / A = - {k}_{g} / {μ}_{g} \times ΔP$ In Equation 2 above, U_{g} is the instantaneous flux of the gas (unit: m/s), Q is the flow rate of the gas (unit: m3/s), A is the cross-sectional area of the GDL sample through which the gas permeates after the pressure (P) is applied (unit: m2), k_{g} is the gas permeability (unit: m2), µ_{g} is the dynamic viscosity of the gas (Pa·s), and ΔP is the differential pressure applied to the GDL sample (unit: Pa). Here, the gas is dry air.
(2) Through-plane gas permeability (ThP) (m2): The through-plane gas permeability (ThP) of the GDL was evaluated by the following method.
   1) First, as shown in (a) of FIG. 2, the GDL was cut into a cylindrical shape to prepare a GDL sample. (a) of FIG. 2 shows a plan view (top), a cross-sectional view (center), and a perspective view (bottom) of the GDL sample.
   2) Next, as shown in (b) of FIG. 2, the GDL sample was positioned on a lower plate of the CPRT-10L equipment manufactured by Living Care.
   3) Next, as shown in (c) of FIG. 2, 50 sccm (standard cubic centimeter per minute) of dry air was flowed while a pressure (P) of 10 bar was applied to the GDL sample through an upper plate, and at this time, the differential pressure (ΔP) applied between the lower portion and the upper portion of the GDL sample was measured.
   4) The differential pressure (ΔP) was applied to Darcy's law represented by Equation 2 above to obtain the gas permeability (k_{g}) (i.e., the through-plane gas permeability (ThP)).
   5) The processes 2) to 4) above were repeated for 10 GDL samples to evaluate the through-plane gas permeability (ThP), and then the average value thereof was taken.

### Evaluation Example 2: Performance Evaluation of Fuel Cell

A total of 21 fuel cells, respectively including the gas diffusion layers prepared in Examples 1 to 9 and Reference Examples 1 to 12 above, were manufactured. The configuration and operating conditions of the fuel cells are summarized in Table 1. Thereafter, the 21 fuel cells were operated at current densities of 1.0 A/cm² and 2.0 A/cm², respectively, and the cell voltages were measured. The results are shown in Table 2. In addition, the difference (ΔV=V2-V1) between the cell voltage (V1) at a current density of 1.0 A/cm² and the cell voltage (V2) at a current density of 2.0 A/cm² is shown in Table 2.

**[Table 1]**

| Sample | CCM (catalyst coated membrane) | Active Area | Cell Temp. |
|---|---|---|---|
| Examples 1-9/ Reference Examples 1-12 | Product manufactured by Gore | 25 cm2 | 80 °C |
| Relative Humidity Anode/Cathode | H₂/O₂ molar ratio | Back Pressure Anode/Cathode | Compressibility |
| 50%/50% | 1.3/1.6 | 150 kPa/130 kPa | 72.5% |

**[Table 2]**

| | InP×10¹² (m²) | ThP×10¹² (m²) | InP/ThP | Cell voltage (@ 1.0A/ cm²) | Cell voltage (@ 2.0A/ cm²) | ΔV (Volt) |
|---|---|---|---|---|---|---|
| Example 1 | 50 | 0.25 | 200 | 0.724 | 0.623 | 0.101 |
| Example 2 | 10 | 0.25 | 40 | 0.725 | 0.622 | 0.103 |
| Example 3 | 100 | 0.25 | 400 | 0.723 | 0.621 | 0.102 |
| Example 4 | 50 | 0.02 | 2,500 | 0.724 | 0.619 | 0.105 |
| Example 5 | 50 | 1 | 50 | 0.723 | 0.617 | 0.106 |
| Example 6 | 10 | 1 | 10 | 0.722 | 0.616 | 0.106 |
| Example 7 | 100 | 1 | 100 | 0.721 | 0.615 | 0.106 |
| Example 8 | 100 | 0.02 | 5,000 | 0.726 | 0.619 | 0.107 |
| Example 9 | 10 | 0.02 | 500 | 0.724 | 0.617 | 0.107 |
| Reference Example 1 | 7 | 1 | 7 | 0.721 | 0.598 | 0.123 |
| Reference Example 2 | 10 | 2 | 5 | 0.717 | 0.582 | 0.135 |
| Reference Example 3 | 100 | 2 | 50 | 0.711 | 0.567 | 0.144 |
| Reference Example 4 | 200 | 1 | 200 | 0.712 | 0.589 | 0.123 |
| Reference Example 5 | 200 | 0.02 | 10,000 | 0.725 | 0.597 | 0.128 |
| Reference Example 6 | 100 | 0.01 | 10,000 | 0.727 | 0.575 | 0.152 |
| Reference Example 7 | 10 | 0.01 | 1,000 | 0.728 | 0.566 | 0.162 |
| Reference Example 8 | 7 | 0.02 | 350 | 0.726 | 0.576 | 0.150 |
| Reference Example 9 | 7 | 0.25 | 28 | 0.723 | 0.599 | 0.124 |
| Reference Example 10 | 200 | 0.25 | 800 | 0.721 | 0.591 | 0.130 |
| Reference Example 11 | 50 | 2 | 25 | 0.711 | 0.577 | 0.134 |
| Reference Example 12 | 50 | 0.01 | 5,000 | 0.726 | 0.571 | 0.155 |

Referring to Table 2 above, in the case of using the gas diffusion layers manufactured in Examples 1 to 9, the cell voltage (V2) at a current density of 2.0 A/cm2 was higher, and the difference (ΔV = V2-V1) between the cell voltage (V1) at a current density of 1.0 A/cm2 and the cell voltage (V2) at a current density of 2.0 A/cm2 was smaller, compared to the case of using the gas diffusion layers manufactured in Reference Examples 1 to 12. The higher the cell voltage (V2) at a current density of 2.0 A/cm2 and the smaller the difference (ΔV = V2-V1) between the cell voltage (V1) at a current density of 1.0 A/cm2 and the cell voltage (V2) at a current density of 2.0 A/cm2, the better the performance of the corresponding fuel cell.

Although preferred embodiments according to the present disclosure have been described above with reference to the drawings and examples, these are merely illustrative, and those of ordinary skill in the art will understand that various modifications and other equivalent embodiments are possible therefrom. Accordingly, the scope of protection of the present disclosure should be defined by the appended claims.

## Claims

1. A gas diffusion layer having an in-plane gas permeability (InP) of 10×10-12 to 100×10-12 m² and a through-plane gas permeability (ThP) of 0.02×10⁻¹2 to 1×10⁻¹² m².

2. The gas diffusion layer of claim 1,
wherein the in-plane gas permeability (InP) and the through-plane gas permeability (ThP) satisfy Equation 1: [Equation 1] $10 \leq lnP / ThP \leq 5,000 .$

3. The gas diffusion layer of claim 1,
comprising a carbon substrate and a microporous layer disposed on the carbon substrate.

4. The gas diffusion layer of claim 3,
wherein the carbon substrate comprises carbon fibers, carbon powder, and a carbonized product of a thermosetting resin.

5. The gas diffusion layer of claim 3,
wherein the carbon substrate has pores having a mean pore diameter of 200 µm or less.

6. The gas diffusion layer of claim 3,
wherein the microporous layer comprises carbon particles, a water-repellent binder resin, and a thickener.

7. The gas diffusion layer of claim 3,
wherein the microporous layer has pores having a modal pore diameter of 100 to 300 nm.

8. A fuel cell comprising the gas diffusion layer according to any one
of claims 1 to 7.
